# EUROPEAN PATENT APPLICATION

(11) **EP 4 683 280 A1**
(43) Date of publication of application: **21.01.2026**
(21) Application number: 24822248.1
(22) Date of filing: 08.02.2024
(51) Int. Cl.: H04L 27/26, H04W 72/04

(54) **DATA TRANSMISSION METHOD AND APPARATUS, AND STORAGE MEDIUM**

(30) Priority: 13.06.2023 CN 202310701134
(71) Applicant: ZTE Corporation, Shenzhen, Guangdong 518057 (CN)
(72) Inventor: XIN, Yu, Shenzhen, Guangdong 518057 (CN); BAO, Tong, Shenzhen, Guangdong 518057 (CN); HUA, Jian, Shenzhen, Guangdong 518057 (CN); YU, Guanghui, Shenzhen, Guangdong 518057 (CN); XU, Jin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/077063
(87) International publication number: WO 2024/255289

(57) **Abstract**

Provided are a data transmission method and apparatus, and a storage medium. The data transmission method comprises: selecting a parameter set from among N parameter sets, wherein the parameter set comprises a first indication and a second indication, the first indication being used for indicating an execution mode of a first inverse Fourier transform, and the second indication being used for indicating an execution mode of a second Fourier transform; and performing data transmission on the basis of the selected parameter set.

## Description

The present disclosure claims a priority to Chinese Patent Application No. 202310701134.5, and filed on June 13, 2023, the entire content of which is incorporated into the present application by reference.

### TECHNICAL FIELD

The present disclosure relates to the field of communication technologies, and in particular, to a data transmission method, an apparatus, and a storage medium.

### BACKGROUND

A fifth generation new radio (Fifth Generation New Radio, 5G NR) communication technology still adopts CP-OFDM as the basic waveform, and different subcarrier spacing Numerologies may be adopted between two adjacent sub-bands, which will destroy the orthogonality between subcarriers, and bring a new interference problem. For addressing this new interference problem, a more common method is to insert a guard bandwidth between two transmission bands with different numerologies, but this method wastes frequency resources.

### SUMMARY

In an aspect, the embodiments of the present disclosure provide a data transmission method. The data transmission method includes:
selecting a group of parameter sets among N groups of parameter sets, where the parameter set includes a first indication and a second indication, the first indication is used to indicate an execution mode of a first inverse Fourier transform, and the second indication is used to indicate an execution mode of a second inverse Fourier transform; and
performing data transmission based on the group of parameter sets that is selected.

In another aspect, the embodiments of the present disclosure provide a data transmission apparatus. The data transmission apparatus includes:
a processing module, configured to select a group of parameter sets among N groups of parameter sets, where the parameter set includes a first indication and a second indication, the first indication is used to indicate an execution mode of a first inverse Fourier transform, and the second indication is used to indicate an execution mode of a second inverse Fourier transform;
a communication module, configured to perform data transmission based on the group of parameter sets that is selected.

In yet another aspect, the embodiments of the present disclosure provide a communication apparatus. The communication apparatus includes: a memory and a processor; the memory is coupled with the processor; the memory is configured to store computer program instructions executable by the processor; and the processor, when executing the computer program instructions, implements the data transmission method according to any one of the above embodiments.

In yet another aspect, the embodiments of the present disclosure provide a computer readable storage medium. The computer readable storage medium has stored computer program instructions thereon, and the computer program instructions, when executed on a computer (e.g., a communication apparatus or a signal transmission apparatus), implement the data transmission method according to any one of the above embodiments.

In yet another aspect, the embodiments of the present disclosure provide a computer program product. The computer program product includes computer program instructions, and the computer program instructions, when executed, implement the data transmission method according to any one of the above embodiments.

### BRIEF DESCRIPTION OF THE DRAWINGS

FIG. 1 is a schematic diagram of an architecture of a communication system according to some embodiments.
FIG. 2 is a flow chart of a data transmission method according to some embodiments.
FIG. 3 is a schematic diagram of a parameter set configuration according to some embodiments.
FIG. 4 is a schematic diagram of another parameter set configuration according to some embodiments.
FIG. 5 is a schematic diagram of yet another parameter set configuration according to some embodiments.
FIG. 6 is a schematic diagram of a configuration parameter for a sub-band according to some embodiments.
FIG. 7 is a schematic diagram of another configuration parameter for a sub-band according to some embodiments.
FIG. 8 is a schematic diagram of yet another configuration parameter for a sub-band according to some embodiments.
FIG. 9 is a schematic diagram of yet another parameter set configuration according to some embodiments.
FIG. 10 is a schematic diagram of yet another parameter set configuration according to some embodiments.
FIG. 11 is a schematic diagram of yet another parameter set configuration according to some embodiments.
FIG. 12 is a flow chart of another data transmission method according to some embodiments.
FIG. 13 is a structural schematic diagram of a data transmission apparatus according to some embodiments.
FIG. 14 is a structural schematic diagram of a communication apparatus according to some embodiments.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. All other embodiments obtained based on the embodiments of the present disclosure by the ordinary skilled in the art without paying any creative effort, shall be included in the protection scope of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more. Expressions, such as "first" and "second", etc., do not limit the number and execution order, and the expressions, such as "first" and "second", etc., also do not necessarily limit different items.

It should be noted that in the present disclosure, the expressions such as "exemplary/exemplarily" or "for example" are used to present an example, illustration, or explanation. Any embodiment or design scheme described with "exemplary/exemplarily" or "for example" in the present disclosure should not be construed as preferred or advantageous over other embodiments or design schemes. Rather, the usage of the expressions, such as "exemplary /exemplarily" or "for example", etc., is intended to present relevant concepts in a detailed manner.

Long term evolution (Long Term Evolution, LTE) technology is a 4G wireless cellular communication technology. LTE adopts an orthogonal frequency division multiplexing (OFDM) technology, where a time-frequency resource composed of subcarriers and OFDM symbols constitutes a wireless physical time-frequency resource of the LTE system.

At present, the OFDM technology has been widely used in wireless communication. Due to the use of cyclic prefix (CP), CP-OFDM system may effectively solve the problem of multi-path latency problems and divide the frequency-selective channel into a set of parallel flat channels, which greatly simplifies the channel estimation method and provides high channel estimation accuracy. However, the performance of the CP-OFDM system is relatively sensitive to a frequency offset and a time offset between adjacent sub-bands, mainly due to large frequency spectrum leakage of the system, which easily leads to the interference between the sub-bands. Currently, the LTE system uses a guard interval in the frequency domain, but this reduces the frequency spectrum efficiency, so new technologies are needed to suppress out-of-band leakage.

5G NR communication technology still adopts CP-OFDM as a basic waveform, and different numerologies may be adopted between two adjacent sub-bands, which will destroy the orthogonality between subcarriers, and bring a new interference problem. For addressing this new interference problem, a more common method is to insert a guard bandwidth between two transmission bands with different numerologies, but this method wastes frequency resources.

With the development of technologies, frequency bands used by the future sixth-generation communication network services span a wide range and the deployment modes thereof also increase. This will not only require multi-bandwidth channels, but also require waveform solutions that satisfy different scenarios. Implementing each waveform scheme independently will increase the cost of the base station/terminal. How to design a unified waveform architecture, flexibly integrate a plurality of types of waveforms, reduce the cost of base stations/terminals, flexibly support applications of different channel bandwidths, flexibly configure different sub-bands to adapt to different channel conditions, and improve frequency spectrum efficiency has become an urgent problem to be solved.

In view of this, the present disclosure provides a data transmission method, which selects a group of parameter sets among N groups of parameter sets, the parameter set includes a first indication and a second indication, the first indication is used to indicate an execution mode of the first inverse Fourier transform, and the second indication is used to indicate an execution mode of the second inverse Fourier transform; and performs data transmission based on the group of parameter sets that is selected. In this way, different waveform types may be selected for data transmission more flexibly to satisfy different needs and requirements. It can also more flexibly support multi-bandwidth channels and a plurality of types of waveforms, thereby improving frequency spectrum efficiency.

The technical solutions provided in the embodiments of the present disclosure may be applied to various mobile communication networks, for example, new radio (New Radio, NR) mobile communication networks using the fifth generation mobile communication technology (5th generation mobile networks, 5G), future mobile communication networks or multiple communication technology fusion systems, etc., which are not limited to the embodiments of the present disclosure.

A network architecture of a mobile communication network (including but not limited to 3G, 4G, 5G and future mobile communication networks) in the embodiments of the present disclosure may include a first communication node and a second communication node. In some examples, the first communication node may be a base station, and the second communication node may be a terminal. In some other examples, the first communication node may be a terminal, and the second communication node may be a base station. In yet another example, in a device-to-device communication scenario, both the first communication node and the second communication node may be terminals. The embodiments of the present disclosure are not limited thereto.

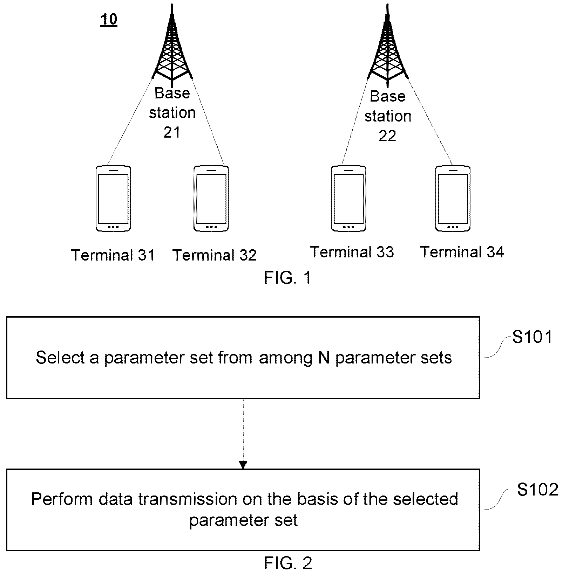

Exemplarily, by taking an example in which the first communication node is a base station and the second communication node is a terminal, FIG. 1 is a schematic diagram of an architecture of a communication system according to some embodiments. As shown in FIG. 1, a communication system 10 includes a plurality of base stations (e.g., base station 21 and base station 22) and a plurality of terminals (e.g., terminal 31, terminal 32, terminal 33, and terminal 34). The plurality of base stations and the plurality of terminals may be communicatively connected.

Exemplarily, by taking an example in which the network side device is a base station and the receiving side device is a terminal, FIG. 1 is a schematic diagram of an architecture of a communication system according to some embodiments. As shown in FIG. 1, a communication system 10 includes a plurality of base stations (e.g., base station 21 and base station 22) and a plurality of terminals (e.g., terminal 31, terminal 32, terminal 33, and terminal 34). The plurality of base stations and the plurality of terminals may be communicatively connected.

In some embodiments, the base station is used to provide radio access services to a plurality of terminals. Specifically, a base station provides at least one service coverage area (also referred to as a cell). A terminal entering the area may communicate with the base station by a wireless signal, to receive a radio access service provided by the base station. The service coverage area of base station 21 may overlap, and a terminal in an overlapped area may receive wireless signals from the plurality of base stations.

In some embodiments, a base station may be connected to a plurality of terminal devices, e.g., base station 21 is connected to terminal 31 and terminal 32. Terminal 31 and terminal 32 may be located in a same cell, or terminal 31 and terminal 32 may also be located in different cells. That is, a base station may provide network services to terminals in a cell, and may also provide network services to terminals in a plurality of cells at the same time.

In some embodiments, a base station may be a base station or an evolutional base station (evolutional node B, eNB or eNodeB) in long term evolution (LTE), long term evolution advanced (LTEA), a base station in a 5G network, or a base station in a future communication system, etc., and the base station may include various macro base stations, micro base stations, home base stations, wireless remote devices, reconfigurable intelligent surfaces (RISs), routers, wireless fidelity (WIFI) devices, or various network side devices in a primary cell and a secondary cell, etc.

In some embodiments, the terminal may be a device with a wireless transceiver function, and the terminal may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a Pad, a computer with a wireless transceiving function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

It should be noted that, FIG. 1 is only an exemplary framework diagram, and a number of devices and names of the various devices included in FIG. 1 are not limited, and in addition to the devices shown in FIG. 1, the communication system may also include other devices (e.g., a core network device).

The embodiments of the present disclosure do not limit application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure. The ordinary skilled in the art may know that with the evolution of the network architectures and the emergence of new service scenarios, the technical solutions provided in the embodiments of the present disclosure are also applicable to similar technical problems.

The embodiments of the present disclosure provide a data transmission method, applied to a communication node (e.g., the above first communication node or the second communication node). As shown in FIG. 2, the method includes the following steps.

S101, select a group of parameter sets among N groups of parameter sets.

Each group of parameter sets among the N groups of parameter sets includes a first indication and a second indication. The first indication is used to indicate an execution mode of the first inverse Fourier transform. The second indication is used to indicate an execution mode of the second inverse Fourier transform. In this way, on the one hand, this can technically support the transmission of multiple different waveform types of data; on the other hand, it can technically support the flexible configuration of sub-band parameters and subcarrier spacing parameters. The first indication may also be named as a first inverse Fourier transform indication, and the second indication may also be named as a second inverse Fourier transform indication.

In some embodiments, the execution mode of the first inverse Fourier transform is determined according to an indication value of the first indication. The execution mode of the first inverse Fourier transform includes whether the first inverse Fourier transform is performed.

In some embodiments, an indication value of the first indication is A, used to indicate that the first inverse Fourier transform is not performed, and A is an integer; an indication value of the first indication is B, used to indicate that the first inverse Fourier transform is an inverse Fourier transform with 1 times of a number of inverse fast Fourier transform (IFFT) points, and B is an integer; an indication value of the first indication is C, used to indicate that the first inverse Fourier transform is an oversampled inverse Fourier transform with two times of a number of IFFT points, and C is an integer; and an indication value of the first indication is D, used to indicate that the first inverse Fourier transform is an oversampled inverse Fourier transform greater than equal to 4 times of a number of IFFT points, and D is an integer.

In some embodiments, there are E available subcarriers in frequency domain within a sub-band before the first inverse Fourier transform, and the indication value of the first indication is A, used to indicate that the first inverse Fourier transform is not performed; the indication value of the first indication is B, used to indicate that the first inverse Fourier transform is an M1-point inverse discrete Fourier transform, M1 is an integer, and E<=M1<2E; the indication value of the first indication is C, used to indicate that the first inverse Fourier transform is an M2-point inverse discrete Fourier transform, M2 is an integer, and 2E<=M2<4E; the indication value of the first indication is D, used to indicate that the first inverse Fourier transform is an M3-point inverse discrete Fourier transform, M3 is an integer and M3>=4E.

In some embodiments, the execution mode of the second inverse Fourier transform is determined according to an indication value of the second indication. The execution mode of the second inverse Fourier transform includes whether the second inverse Fourier transform is performed, and if the second inverse Fourier transform is performed, a number of sampling points of the second inverse Fourier transform.

In some embodiments, an indication value of the second indication is A, used to indicate that the second inverse Fourier transform is not performed; an indication value of the second indication is B, used to indicate that the second inverse Fourier transform is an inverse Fourier transform with 1 times of a number of IFFT points; an indication value of the second indication is C, used to indicate that the second inverse Fourier transform is an oversampled inverse Fourier transform with two times of a number of IFFT points; and an indication value of the second indication is D, used to indicate that the second inverse Fourier transform is an oversampled inverse Fourier transform greater than equal to 4 times of a number of IFFT points.

In some embodiments, there are F sub-bands in the frequency domain before the second inverse Fourier transform, and the indication value of the second indication is A, used to indicate that the second inverse Fourier transform is not performed; the indication value of the second indication is B, used to indicate that the second inverse Fourier transform is an X1-point inverse discrete Fourier transform, X1 is an integer, and F<=X1< 2F; the indication value of the second indication is C, used to indicate that the second inverse Fourier transform is an X2-point inverse discrete Fourier transform, X2 is an integer, and 2F<=X2<4F; the indication value of the second indication is D, used to indicate that the second inverse Fourier transform is an X3-point inverse discrete Fourier transform, X3 is an integer and X3>=4F.

In some embodiments, the indication value A is 0; the indication value B is 1; the indication value C is 2; and the indication value D is 3. It should be understood that, the above values of A, B, C, and D are only examples and do not constitute limitations. Furthermore, for different indications (e.g., the first indication and the third indication), the indication values A, B, C, and D may have different values.

In some embodiments, the number of IFFT points of the first inverse Fourier transform and the number of IFFT points of the second inverse Fourier transform both satisfy an n-th power of 2, where n is a natural number.

In some embodiments, an operation related to the second indication is performed after an operation related to the first indication.

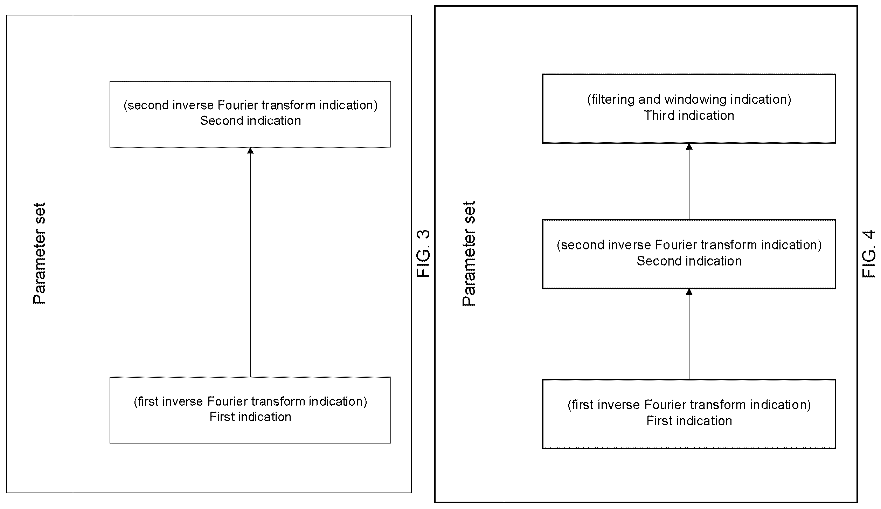

Exemplarily, FIG. 3 provides a parameter set configuration, and as shown in FIG. 3, the parameter set contains a first indication and a second indication, that is, a first inverse Fourier transform indication and a second inverse Fourier transform indication. The operation related to the second indication is performed after an operation related to the first indication.

In some embodiments, the parameter set further includes a third indication, where the third indication is used to indicate performing a filtering operation or a windowing operation on data. In this way, performing the filtering operation or windowing operation on the data may reduce the interference between sub-bands. The third indication may also be named as a filtering and windowing indication.

In some embodiments, whether to perform the filtering operation or the windowing operation on the data is determined according to the indication value of the third indication.

In some embodiments, an indication value of the third indication is A, used to indicate that the filtering operation or windowing operation is not performed on the data; an indication value of the third indication is B, used to indicate that the windowing operation is performed on the data; an indication value of the third indication is C, used to indicate that the filtering operation is performed on the data; and an indication value of the third indication is D, used to indicate that a multi-phase filtering operation is performed on the data.

In some embodiments, an operation related to the third indication is executed after an operation related to the second indication.

Exemplarily, FIG. 4 provides a parameter set configuration and as shown in FIG. 4, the parameter set contains a first indication, a second indication, and a third indication, that is, a first inverse Fourier transform indication, a second inverse Fourier transform indication, and a filtering and windowing indication. The operation related to the third indication is executed after the operation related to the second indication, and the operation related to the second indication is executed after the operation related to the first indication.

In some embodiments, the parameter set further includes a fourth indication, where the fourth indication is used to indicate a configuration parameter of a sub-band. The fourth indication may also be named as a sub-band parameter configuration parameter indication.

In some embodiments, the configuration parameter of the sub-band includes a sub-band number parameter and a subcarrier spacing parameter.

In some embodiments, an indication value of the sub-band number parameter is A, used to indicate that a number of sub-bands is 1; an indication value of the sub-band number parameter is B, used to indicate that a number of sub-bands is M, where M is an integer greater than 1.

In some other embodiments, the sub-band number parameter is represented by L, and the sub-band number parameter is L, used to indicate that a number of sub-bands is L+1, and L is a natural number. For example, the sub-band number parameter is 0, used to indicate that the number of sub-bands is 1; the sub-band number parameter is 1, used to indicate that the number of sub-bands is 2.

In some embodiments, in a case where the indication value of the sub-band number parameter is A, the indication value of the second indication is A. In this way, in a case where the number of sub-bands is 1, it is only necessary to perform the required processing on this single sub-band, and there is no need to perform the second inverse Fourier transform on the data in the sub-band.

In some embodiments, the indication value of the subcarrier spacing parameter is A, used to indicate that subcarrier spacings of the sub-bands are the same; in a case where the indication value of the subcarrier spacing parameter is B, it is used to indicate that subcarrier spacings of the sub-bands are different.

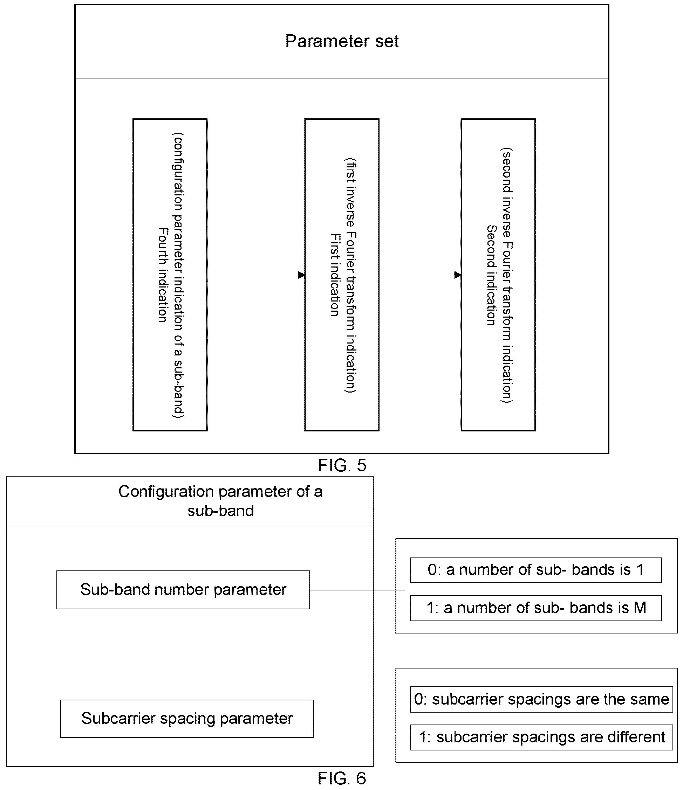

Exemplarily, FIG. 5 provides a parameter set configuration and as shown in FIG. 5, the parameter set contains a first indication, a second indication and a fourth indication, that is, a configuration parameter indication of a sub-band, a first inverse Fourier transform indication, and a second inverse Fourier transform indication. The operation related to the fourth indication is performed before the operation related to the first indication, and the operation related to the second indication is performed after the operation related to the first indication.

Exemplarily, FIG. 6 provides a configuration parameter of a sub-band and as shown in FIG. 6, the configuration parameter of the sub-band includes a sub-band number parameter and a subcarrier spacing parameter. The sub-band number parameter is 0, used to indicate that a number of sub-bands is 1; the sub-band number parameter is 1, used to indicate that the number of sub-bands is M, where M is an integer greater than 1. The subcarrier spacing parameter is 0, used to indicate that the subcarrier spacings of the sub-bands are the same; the subcarrier spacing parameter is 1, used to indicate that the subcarrier spacings of the sub-bands are different.

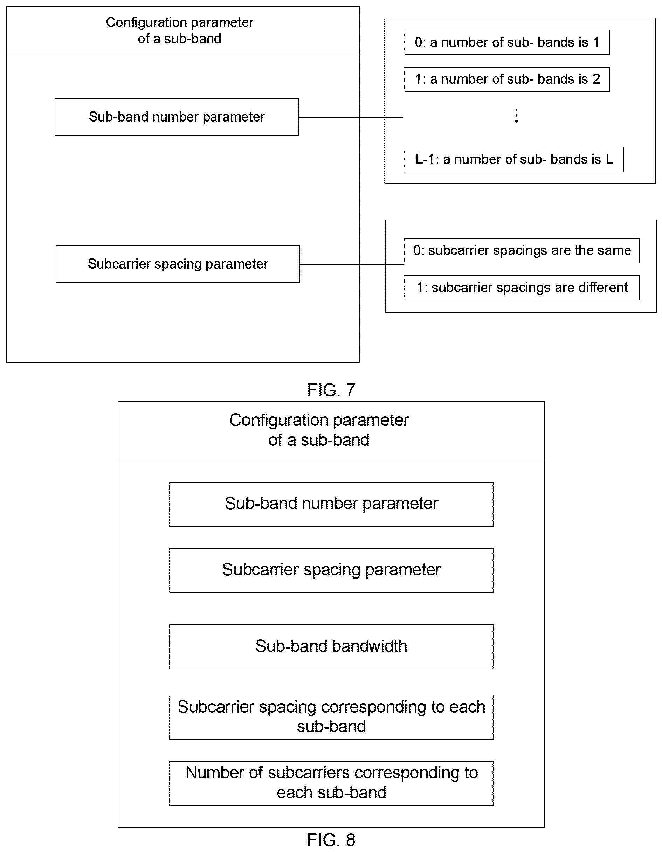

As yet another example, FIG. 7 provides another configuration parameter of the sub-band. As shown in FIG. 7, the configuration parameter of the sub-band includes a sub-band number parameter and a subcarrier spacing parameter. The sub-band number parameter is represented by L, and the sub-band number parameter is L, used to indicate that a number of sub-bands is L+1, and L is a natural number. The subcarrier spacing parameter is 0, used to indicate that the subcarrier spacings of the sub-bands are the same; in a case where the subcarrier spacing parameter is 1, it is used to indicate that the subcarrier spacings of the sub-bands are different.

In some embodiments, the configuration parameter of the sub-band further includes at least one of a sub-band bandwidth, a subcarrier spacing corresponding to each sub-band, and a number of subcarriers corresponding to each sub-band.

Exemplarily, FIG. 8 provides another configuration parameter of the sub-band and as shown in FIG. 8, the configuration parameter of the sub-band includes a sub-band number parameter, a subcarrier spacing parameter, a sub-band bandwidth, a subcarrier spacing corresponding to each sub-band, and a number of subcarriers corresponding to each sub-band.

In some embodiments, the parameter set further includes a fifth indication, where the fifth indication is used to indicate whether to perform discrete Fourier transform (discrete fourier transform, DFT) modulation or orthogonal time frequency and space (OTFS) modulation on the data. The fifth indication may also be named a data transform processing indication.

DFT modulation is a transformation method that converts time domain signals into frequency domain for spectrum analysis or signal processing.

OTFS modulation is a modulation mode based on the time-frequency grid, which maps digital information onto the time-frequency grid, and maintains orthogonality in the time domain and frequency domain, thereby effectively combating multi-path interference and multi-user interference in the wireless transmission procedure. OTFS modulation extends a time window of multi-path communication transmission by evenly distributing channel fading in the time domain and frequency domains, thereby improving communication quality and reliability.

In some embodiments, whether to perform the DFT modulation or the OTFS modulation on the data is determined according to an indication value of the fifth indication.

In some embodiments, an indication value of the fifth indication is A, used to indicate that the data transformation processing is not performed; an indication value of the fifth indication is B, used to indicate that the DFT modulation is performed on the data; and an indication value of the fifth indication is C, used to indicate that the OTFS modulation is performed on the data. For example, the indication value A is 0; the indication value B is 1; and the indication value C is 2.

In some embodiments, an operation related to the fifth indication is performed before an operation related to the first indication.

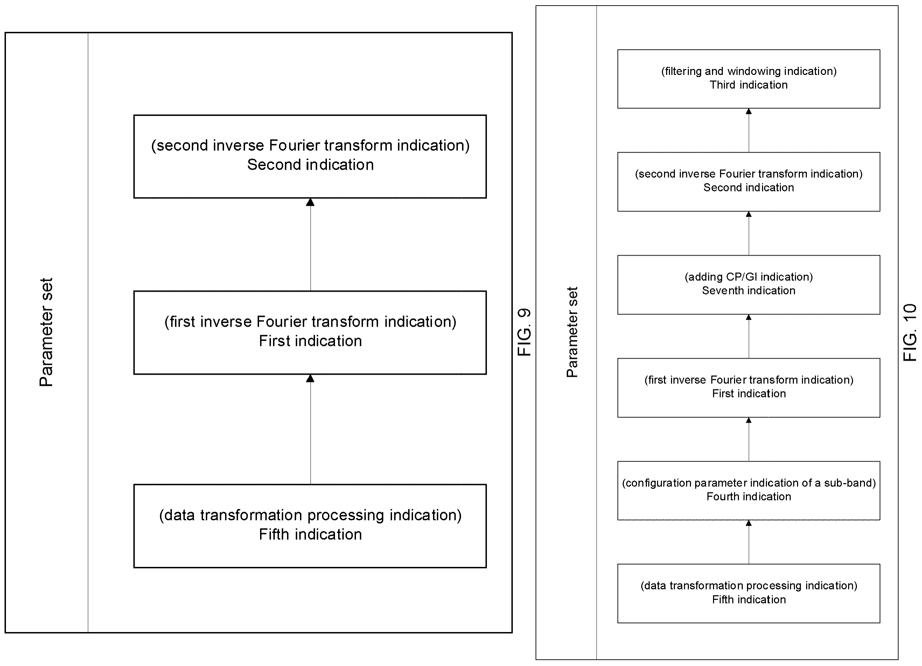

Exemplarily, FIG. 9 provides a parameter set configuration. As shown in FIG. 9, the parameter set includes a first indication, a second indication, and a fifth indication, that is, a data transformation processing indication, a first inverse Fourier transform indication, and a second inverse Fourier transform indication. The operation related to the fifth indication is performed before an operation related to the first indication.

In some embodiments, the parameter set also includes a sixth indication, where the sixth indication is used to indicate a carrying mode of data in time and frequency. Exemplarily, the sixth indication is used to indicate that data is transmitted in the time domain, or in the frequency domain, or in the time-frequency domain, for example, a chirp transmission signal. The sixth indication may also be named as a carrying mode indication of the data in the time and frequency.

In some embodiments, the parameter set further includes a seventh indication, and the seventh indication is used to indicate whether to add a cyclic prefix or a guard interval after the data undergoes the first inverse Fourier transform. It should be understood that, adding a cyclic prefix or a guard interval may effectively suppress the impact of multi-path interference and crosstalk and improve communication quality and reliability.

In some embodiments, whether to add a cyclic prefix or a guard interval after the data undergoes the first inverse Fourier transform is determined according to an indication value of the seventh indication. The seventh indication may also be named as an adding CP/GI indication.

In some embodiments, an indication value of the seventh indication is A, used to indicate that the cyclic prefix or guard interval is not added after the data undergoes the first inverse Fourier transform; an indication value of the seventh indication is B, used to indicate that a cyclic prefix is added after the data undergoes the first inverse Fourier transform; and an indication value of the seventh indication is C, used to indicate that a guard interval is added after the data undergoes the first inverse Fourier transform. For example, the indication value A is 0; the indication value B is 1; and the indication value C is 2.

Exemplarily, FIG. 10 provides a parameter set configuration and as shown in FIG. 10, the parameter set includes a first indication, a second indication, a third indication, a fourth indication, a fifth indication and a seventh indication. The execution order of the above indications in sequence is as follows: the fifth indication, the fourth indication, the first indication, the seventh indication, the second indication, the third indication, that is, the data transformation processing indication, the configuration parameter indication of the sub-band, the first inverse Fourier transform indication, the adding CP/GI indication, the second inverse Fourier transform indication and the filtering and windowing indication.

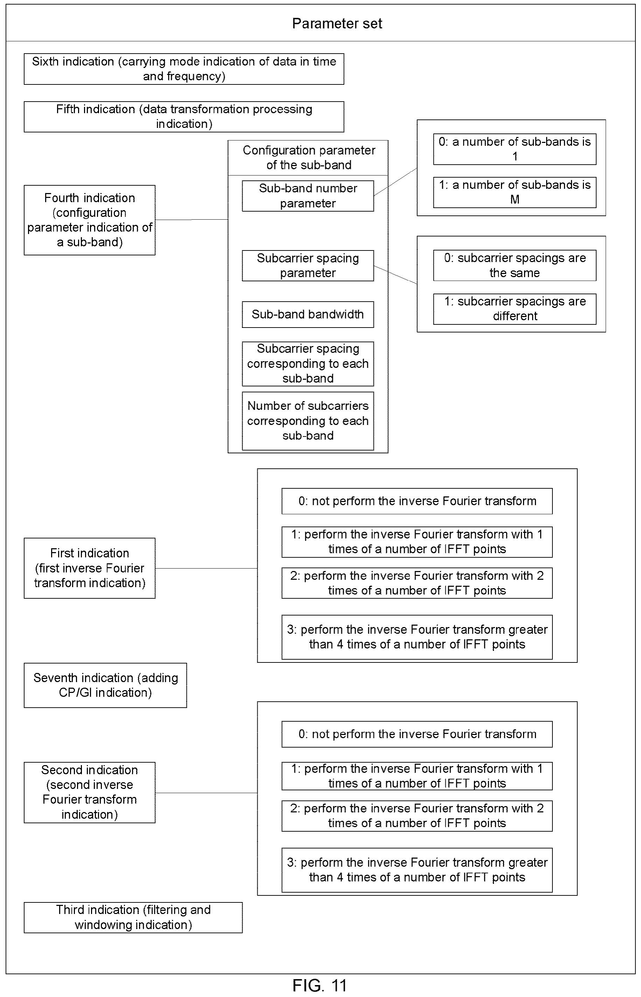

As yet another example, FIG. 11 provides a parameter set configuration. As shown in FIG. 11, the parameter set includes a first indication, a second indication, a third indication, a fourth indication, a fifth indication, a sixth indication and a seventh indication. The execution order of the above indications in sequence is as follows: the sixth indication, the fifth indication, the fourth indication, the first indication, the seventh indication, the second indication, and the third indication, that is, the carrying mode indication of the data in time and frequency, the data transformation processing indication, the configuration parameter indication of the sub-band, the first inverse Fourier transform indication, the adding CP/GI indication, the second inverse Fourier transform indication and the filtering and windowing indication. The configuration parameter of the sub-band indicated by the fourth indication includes a sub-band number parameter, a subcarrier spacing parameter, a sub-band bandwidth, a subcarrier spacing corresponding to each sub-band, and a number of subcarriers corresponding to each sub-band. The sub-band number parameter is 0, used to indicate that a number of sub-bands is 1; the sub-band number parameter is 1, used to indicate that the number of sub-bands is M, where M is an integer greater than 1. The subcarrier spacing parameter is 0, used to indicate that the subcarrier spacings of the sub-bands are the same; the subcarrier spacing parameter is 1, used to indicate that the subcarrier spacings of the sub-bands are different.

Continuing to refer to FIG. 11, the indication value of the first indication is 0, used to indicate that the first inverse Fourier transform is not performed; the indication value of the first indication is 1, used to indicate that the first inverse Fourier transform is an inverse Fourier transform with 1 times of the number of inverse discrete Fourier transform (IFFT) points; the indication value of the first indication is 2, used to indicate that the first inverse Fourier transform is an oversampled inverse Fourier transform with 2 times of the number of IFFT points; the indication value of the first indication is 3, used to indicate that the first inverse Fourier transform is an oversampled inverse Fourier transform with greater than equal to 4 times of the number of IFFT points.

Continuing to refer to FIG. 11, the indication value of the second indication is 0, used to indicate that the second inverse Fourier transform is not performed; the indication value of the second indication is 1, used to indicate that the second inverse Fourier transform is an inverse Fourier transform with 1 times of the number of IFFT points; the indication value of the second indication is 2, used to indicate that the second inverse Fourier transform is an oversampled inverse Fourier transform with 2 times of the number of IFFT points; the indication value of the second indication is 3, used to indicate that the second inverse Fourier transform is an oversampled inverse Fourier transform greater than equal to 4 times of the number of IFFT points.

In some embodiments, each group of parameter sets among the N groups of parameter sets has a corresponding identifier, and different groups of parameter sets correspond to different identifiers.

In some embodiments, each identifier among identifiers respectively corresponding to the N groups of parameter sets corresponds to different carrier types.

In some embodiments, at least one group of parameter sets among the N groups of parameter sets includes both the first indication and the second indication not being A.

Exemplarily, Table 1 provides a parameter set configuration table. Display detailed N groups of parameter set configurations in a table. In Table 1, columns and rows together indicate a plurality of groups of parameter configurations included in the N groups of parameter sets. There are R rows and C columns in Table 1, R=8, C=N+1. In Table 1, each column other than the first column is a configuration of a parameter set, and each row other than the first row is an indication value corresponding to each indication. In Table 1, the first row represents a group number of N groups of parameter sets; the first column represents indication types included in the N groups of parameter sets, including the carrying mode indication of the data in time and frequency, the data transformation processing indication, the configuration parameter indication of the sub-band, the first inverse Fourier transform indication, the adding CP/GI indication, the second inverse Fourier transform indication and the filtering and windowing indication. The first inverse Fourier transform indication is used to indicate the execution mode of the first inverse Fourier transform. The indication value of the first inverse Fourier transform indication is represented by 0, 1, 2 or 3. The second inverse Fourier transform indication is used to indicate the execution mode of the second inverse Fourier transform. The indication value of the second inverse Fourier transform indication is represented by 0, 1, 2 or 3. For example, the second column represents a parameter configuration status of a first group of parameter sets, and the second column and the fifth row represent the execution status of the first inverse Fourier transform in the first group of parameter sets.

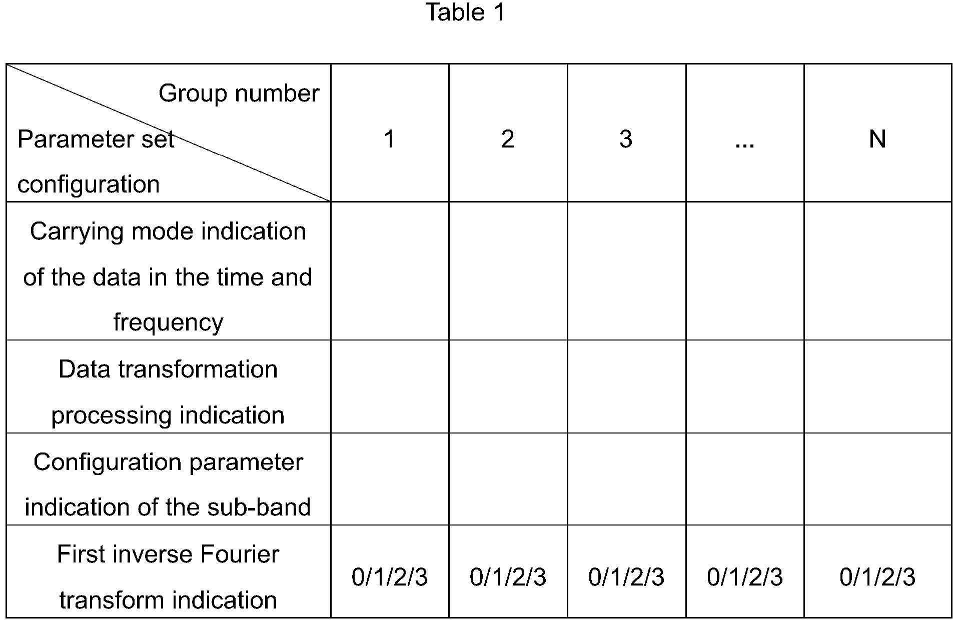

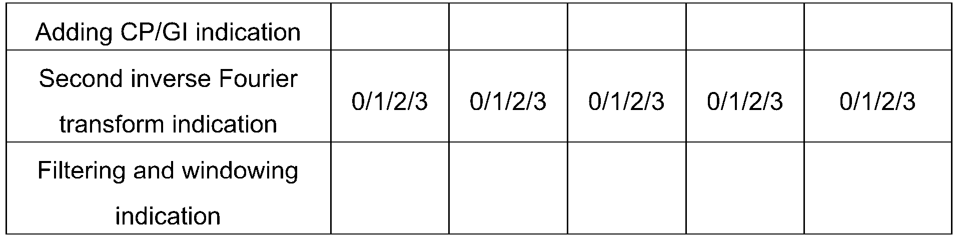

As yet another example, Table 2 provides a parameter set configuration table. Display detailed configurations of N groups of parameter sets in a table. There are R rows and C columns in Table 2, R=11, C=N+1. In Table 2, each column other than the first column is a configuration of a parameter set, and each row other than the first row is an indication value corresponding to each indication. The first row in Table 2 represents the group number of N groups of parameter sets, and the first column in Table 2 represents a plurality of indication types included in the N groups of parameter sets, specifically including the carrying mode indication of the data in time and frequency, the data transformation processing indication, the configuration parameter indication of the sub-band, the first inverse Fourier transform indication, the adding CP/GI indication, the second inverse Fourier transform indication and the filtering and windowing indication.

The configuration parameter indication of the sub-band is used to indicate the configuration parameter of the sub-band, including the sub-band number parameter, the subcarrier spacing parameter, the sub-band bandwidth, the subcarrier spacing corresponding to each sub-band, and a number of subcarriers corresponding to each sub-band. The sub-band number parameter is represented by "0/1", the sub-band number parameter is 0, used to indicate that a number of sub-bands is 1; and the sub-band number parameter is 1, used to indicate that the number of sub-bands is M, where M is an integer greater than 1. The subcarrier spacing parameter is represented by "0/1", the subcarrier spacing parameter is 0, used to indicate that the subcarrier spacings of the sub-bands are the same; the sub-band number parameter is 1, used to indicate that the subcarrier spacings of the sub-bands are different.

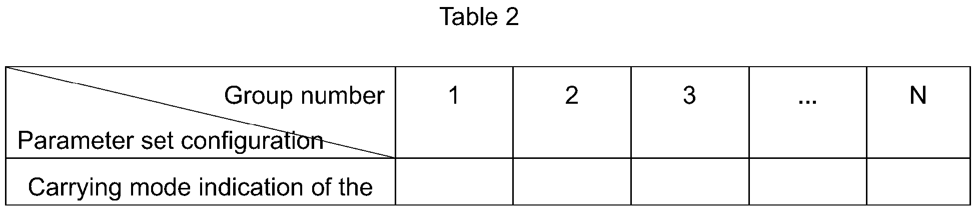

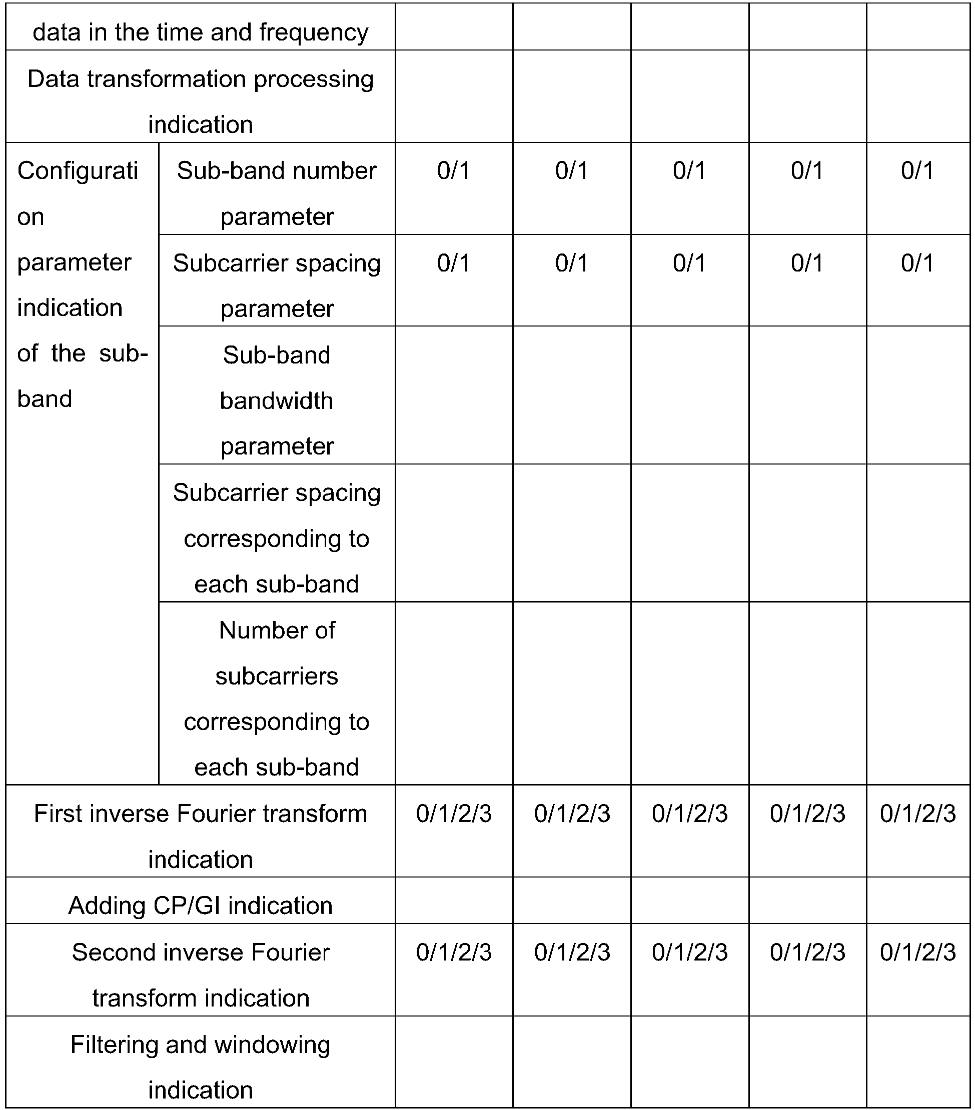

S102, perform data transmission based on the group of parameter sets that is selected.

In some embodiments, performing the data transmission based on the group of parameter sets that is selected is implemented as the following steps.

Assume that the group of parameter sets that is selected contains a sixth indication, a fifth indication, a fourth indication, a first indication, a seventh indication, a second indication and a third indication.

Step 1, determine the carrying mode of the transmission data in the time-frequency according to the sixth indication;
Step 2, determine whether to perform the data transformation processing on the transmission data according to the fifth indication, that is, perform the DFT modulation or the OTFS modulation on the data;
Step 3, determine the configuration parameter of the sub-band used for the transmission data according to the fourth indication, that is, the number of sub-bands corresponding to the transmission data, the subcarrier spacing, the sub-band bandwidth, the subcarrier spacing corresponding to each sub-band, and the number of subcarriers corresponding to each sub-band;
Step 4, determine whether to respectively perform the first inverse Fourier transform on subcarrier data of each sub-band in the plurality of sub-bands used for transmission data according to the first indication, to obtain time domain data of each sub-band;
Step 5, determine whether to add CP or GI to the time domain data of each sub-band according to the seventh indication;
Step 6, determine whether to perform the second inverse Fourier transform on the time domain data that the CP or GI is added according to the second indication, to obtain the time domain data of a plurality of sub-bands; and
Step 7, determine whether to perform the filtering operation or windowing operation on the time domain data of the plurality of sub-bands according to the third indication.

Exemplarily, Table 3 provides a parameter set configuration table. Display detailed configurations of N groups of parameter sets in a table. The first row in Table 3 represents the group number of N groups of parameter sets, and the first column in Table 3 represents a plurality of indication types included in the N groups of parameter sets, specifically including the carrying mode indication of the data in time and frequency, the data transformation processing indication, the configuration parameter indication of the sub-band, the first inverse Fourier transform indication, the adding CP/GI indication, the second inverse Fourier transform indication and the filtering and windowing indication.

The indication value of the carrying mode indication of the data in the time and frequency is 0, used to indicate that the data is transmitted in the time domain; the indication value of the carrying mode indication of the data in time and frequency is 1, used to indicate that the data is transmitted in the frequency domain; the indication value of the carrying mode indication of the data in time and frequency is 2, used to indicate that the data is transmitted in the time and frequency domain.

The indication value of the data transformation processing indication is 0, used to indicate that the data transformation processing is not performed; the indication value of the data transformation processing indication is 1, used to indicate that the DFT modulation is performed on the data; and the indication value of the data transformation processing indication is 2, used to indicate that the OTFS modulation is performed on the data.

The configuration parameter of the sub-band includes the sub-band number parameter, the subcarrier spacing parameter, the sub-band bandwidth, the subcarrier spacing corresponding to each sub-band, and the number of subcarriers corresponding to each sub-band.

The sub-band number parameter is represented by "0~L-1", the sub-band number parameter is 0, used to indicate that the number of sub-bands is 1; the sub-band number parameter is 1, used to indicate that the number of sub-bands is 2; ..., and the sub-band number parameter is L-1, used to indicate that the number of sub-bands is L.

The subcarrier spacing parameter is represented by "0/1", the subcarrier spacing parameter is 0, used to indicate that the subcarrier spacings are the same; and the subcarrier spacing parameter is 1, used to indicate that the subcarrier spacings are different.

The indication value of the first inverse Fourier transform indication is represented by "0/1/2/3". The indication value of the first inverse Fourier transform indication is 0, used to indicate that the first inverse Fourier transform is not performed; the indication value of the first inverse Fourier transform indication is 1, used to indicate that the first inverse Fourier transform is an inverse Fourier transform with 1 times of the number of IFFT points; the indication value of the first inverse Fourier transform indication is 2, used to indicate that the first inverse Fourier transform is an oversampled inverse Fourier transform with 2 times of the number of IFFT points; the indication value of the first inverse Fourier transform indication is 3, used to indicate that the first inverse Fourier transform is an oversampled inverse Fourier transform with greater than equal to 4 times of the number of IFFT points.

The indication value of adding CP/GI indication is represented by "0/1/2". The indication value of the adding CP/GI indication is 0, used to indicate that the cyclic prefix or guard interval is not added after the data undergoes the first inverse Fourier transform; the indication value of the adding CP/GI indication is 1, used to indicate that the cyclic prefix is added after the data undergoes the first inverse Fourier transform; and the adding CP/GI indication is 2, used to indicate that the guard interval is added after the data undergoes the first inverse Fourier transform.

The indication value of the second inverse Fourier transform indication is represented by "0/1/2/3". The indication value of the second inverse Fourier transform indication is 0, used to indicate that the second inverse Fourier transform is not performed; the indication value of the second inverse Fourier transform indication is 1, used to indicate that the second inverse Fourier transform is an inverse Fourier transform with 1 times of the number of IFFT points; the indication value of the second inverse Fourier transform indication is 2, used to indicate that the second inverse Fourier transform is an oversampled inverse Fourier transform with 2 times of the number of IFFT points; the indication value of the second inverse Fourier transform indication is 3, used to indicate that the second inverse Fourier transform is an oversampled inverse Fourier transform with greater than equal to 4 times of the number of IFFT points.

The indication value of the filtering and windowing indication is represented by "0/1/2/3". The indication value of the filtering and windowing indication is 0, used to indicate that the filtering or windowing is not performed; the indication value of the filtering and windowing indication is 1, used to indicate that windowing processing is performed; the indication value of the filtering and windowing indication is 2, used to indicate that the filtering processing is performed; the indication value of the filtering and windowing indication is 3, used to indicate the multi-phase filtering processing is performed.

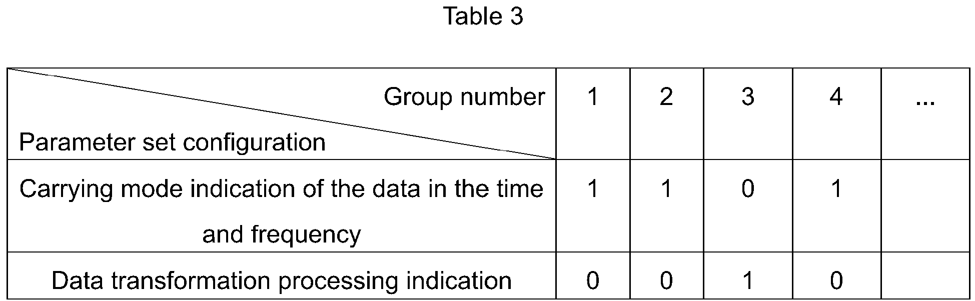

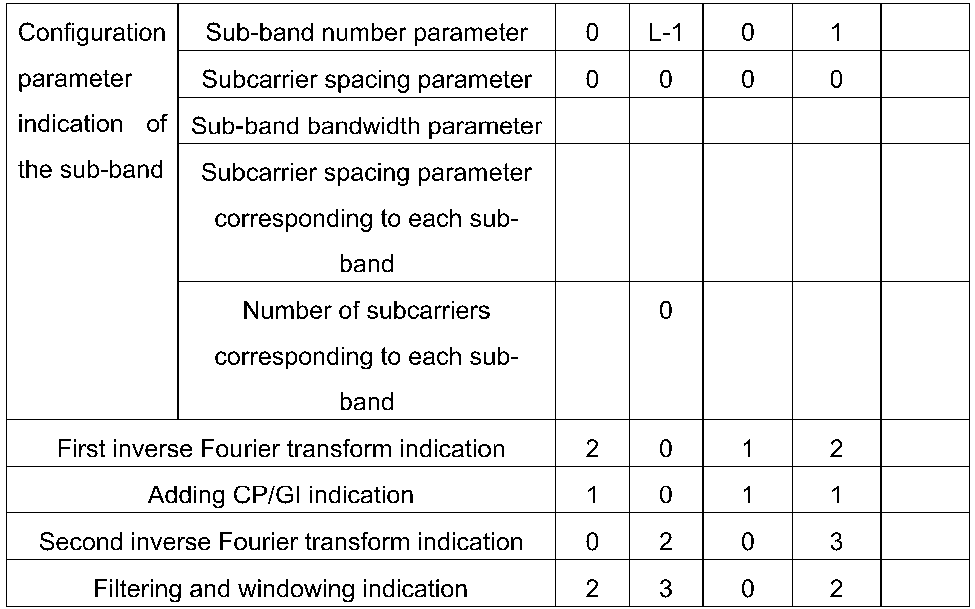

For example, continuing to refer to Table 3, among the N groups of parameter set configurations, a first group of parameter set configurations is selected for data transmission. Thus, the data is transmitted in the frequency domain, and there is 1 sub-band, and then the subcarriers on the 1 sub-band are subjected to the first inverse Fourier transform with 2 times of oversampling; then CP is added to the time domain signal output by the first inverse Fourier transform, and then a filtering operation is performed. The first group of parameter sets may be used for Filter OFDM data transmission.

Alternatively, among the N groups of parameter set configurations, a second group of parameter sets is selected for data transmission. The data is transmitted in the frequency domain, and there are L sub-bands, each of which contains 1 subcarrier. Then, subcarriers in the L sub-bands are subjected to 2 times of oversampled second inverse Fourier transform, and then subjected to a multi-phase filtering operation. The second group of parameter sets may be used for FB OFDM data transmission.

Alternatively, among the N groups of parameter set configurations, a third group of parameter sets is selected for data transmission. The data is transmitted in the time domain, and then the DFT processing is performed, and there is 1 sub-band, and then the frequency domain data after the DFT processing is subjected to a 2 times of oversampled first inverse Fourier transform; then the CP is added to the time domain data output by the first inverse Fourier transform. The third group of parameter sets may be used for DFT s OFDM data transmission.

Alternatively, among the N groups of parameter set configurations, a fourth group of parameter sets is selected for data transmission. The data is transmitted in the frequency domain, there are 2 sub-bands, and then the subcarrier data contained in each of the 2 sub-bands is subjected to the 2 times of oversampled first inverse Fourier transform; then the CP is added to the time domain data output by the first inverse Fourier transform; then the time domain data after the CP is added is placed on 2 rows, and then 2 data is taken out according to the column, and the 2 data taken out is subjected to a 4 times of oversampled second inverse Fourier transform, and then the multi-phase filtering operation is performed. The fourth group of parameter sets may be used for GFB OFDM data transmission.

Based on this, a group of parameter sets is selected among the N groups of parameter sets, and the data transmission is performed based on the group of parameter sets that is selected. Not only can different waveform types be flexibly selected for data transmission as needed, but also different data transmission modes can be flexibly selected as needed. These needs include a low peak-to-average ratio, support for different service types, fast switching of different application scenarios, etc.

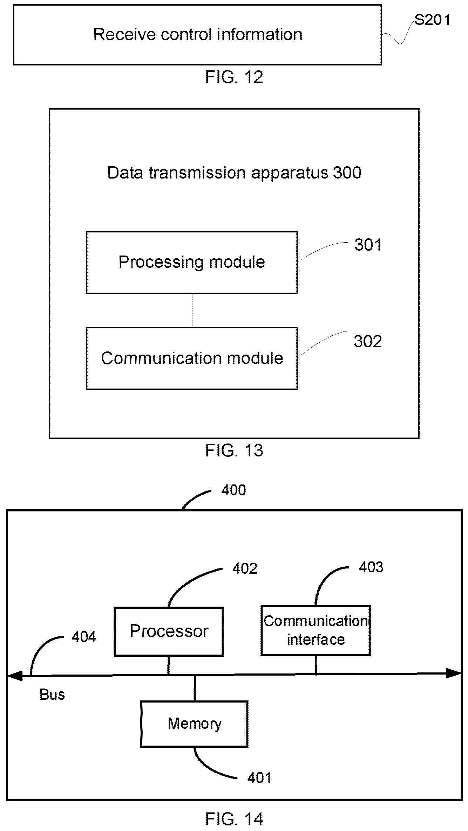

The embodiments of the present disclosure provide a data transmission method. As shown in FIG. 12, the method includes the following content.

S201, receive control information.

The control information carries an identifier of the group of parameter sets that is selected.

In some embodiments, the control information is carried in downlink control information (DCI) or in a radio resource control (RRC) signaling.

In some embodiments, each group of parameter sets among the N groups of parameter sets includes at least one parameter subset.

In some embodiments, each group of parameter subsets among the at least one group of parameter subsets has a corresponding subset identifier, and different groups of parameter subsets correspond to different subset identifiers.

In some embodiments, in the control information, the identifier of the group of parameter sets that is selected occupies log2N bits, and the subset identifier of the group of parameter subsets that is selected occupies log2P bits, where a value of P is equal to a number of parameter subsets of a parameter set with a largest number of parameter subsets among the N groups of parameter sets.

Exemplarily, there are N groups of parameter sets, and each group of parameter set configurations includes Q (n) group (s) of subsets. n=1, 2, ..., N.

When n=1, the first group of parameter set configurations among the N groups of parameter set configurations includes Q(1) group of subsets.

When n=N, the Nth group of parameter set configurations among the N groups of parameter set configurations includes Q( N) group (s) of subsets.

In the control information, log2N bits of information are used to indicate the identifier of the parameter set that is selected. The subset identifier of the group of parameter subsets that is selected is represented by log2P bits of information, where P is a maximum value in Q(n).

For example, continuing to refer to Table 1, assuming that there are 4 groups of parameter set configurations, where the first group of parameter set configurations includes 2 groups of subsets, the second group of parameter set configurations includes 4 groups of subsets, the third group of parameter set configurations includes 8 groups of subsets, and the fourth group of parameter set configurations includes 16 groups of subsets, then N is equal to 4 and P is equal to 16. Therefore, in the control information, 2 bits of information are used to represent the identifier of the parameter set that is selected. Four bits of information are used to indicate a subset identifier of the group of parameter subsets that is selected.

Based on this, by receiving the control information, the group of parameter sets that is selected may be quickly determined based on the identifier of the group of parameter sets that is selected carried in the control information.

The above introduces the solutions of the embodiments of the present disclosure mainly from the perspective of methods. A data transmission apparatus is also shown below, which is used to perform the data transmission method in any one of the above embodiments and possible implementations thereof. It can be understood that, the data transmission apparatus contains the corresponding hardware structures and/or software modules for performing various functions in order to implement the data transmission method and those skilled in the art should easily recognize that the present disclosure can be implemented in the form of hardware or a combination of hardware and computer software, in conjunction with the algorithm steps of various examples described in the embodiments of the present disclosure. Whether a certain function is performed by hardware or by computer software driving hardware, depends on a specific application and a design constraint condition of the technical solution. Professional technicians may use different methods to implement the described functions for each specific application, but such implementation should not be considered beyond the scope of the present disclosure.

In the embodiments of the present disclosure, the data transmission apparatus may be divided into functional modules according to the above-mentioned method embodiments, and for example, each functional module may be divided corresponding to each function, or two or more functions may also be integrated into one functional module. The above-mentioned integrated module may be implemented in the form of hardware or may also be implemented in the form of software. It should be noted that the division of the modules in embodiments of the present disclosure is schematic, which is only a logical functional division, and there may be other divisions for in actual implementations. The example in which each functional module may be divided corresponding to each function is taken for explanation below.

FIG. 13 is a data transmission apparatus according to some embodiments. The data transmission apparatus 300 includes: a processing module 301 and a communication module 302.

The processing module 301 is configured to select a group of parameter sets among N groups of parameter sets, where the parameter set includes a first indication and a second indication, the first indication is used to indicate an execution mode of a first inverse Fourier transform, and the second indication is used to indicate an execution mode of a second inverse Fourier transform;
the communication module 302 is configured to perform data transmission based on the group of parameter sets that is selected.

In some embodiments, an indication value of the first indication is A, used to indicate that the first inverse Fourier transform is not performed, and A is an integer; an indication value of the first indication is B, used to indicate that the first inverse Fourier transform is an inverse transform with 1 times of a number of IFFT points, and B is an integer; an indication value of the first indication is C, used to indicate that the first inverse Fourier transform is an oversampled inverse Fourier transform with two times of a number of IFFT points, and C is an integer; and an indication value of the first indication is D, used to indicate that the first inverse Fourier transform is an oversampled inverse Fourier transform greater than equal to 4 times of a number of IFFT points, and D is an integer.

In some embodiments, there are E available subcarriers in frequency domain within a sub-band before the first inverse Fourier transform, and the indication value of the first indication is A, used to indicate that the first inverse Fourier transform is not performed; the indication value of the first indication is B, used to indicate that the first inverse Fourier transform is an M1-point inverse discrete Fourier transform, M1 is an integer, and E<=M1<2E; the indication value of the first indication is C, used to indicate that the first inverse Fourier transform is an M2-point inverse discrete Fourier transform, M2 is an integer, and 2E<=M2<4E; the indication value of the first indication is D, used to indicate that the first inverse Fourier transform is an M3-point inverse discrete Fourier transform, M3 is an integer and M3>=4E.

In some embodiments, an indication value of the second indication is A, used to indicate that the second inverse Fourier transform is not performed; an indication value of the second indication is B, used to indicate that the second inverse Fourier transform is an inverse Fourier transform with 1 times of a number of IFFT points; an indication value of the second indication is C, used to indicate that the second inverse Fourier transform is an oversampled inverse Fourier transform with two times of a number of IFFT points; and an indication value of the second indication is D, used to indicate that the second inverse Fourier transform is an oversampled inverse Fourier transform greater than equal to 4 times of a number of IFFT points.

In some embodiments, there are F sub-bands in the frequency domain before the second inverse Fourier transform, and the indication value of the second indication is A, used to indicate that the second inverse Fourier transform is not performed; the indication value of the second indication is B, used to indicate that the second inverse Fourier transform is an X1-point inverse discrete Fourier transform, X1 is an integer, and F<=X1< 2F; the indication value of the second indication is C, used to indicate that the second inverse Fourier transform is an X2-point inverse discrete Fourier transform, X2 is an integer, and 2F<=X2<4F; the indication value of the second indication is D, used to indicate that the second inverse Fourier transform is an X3-point inverse discrete Fourier transform, X3 is an integer and X3>=4F.

In some embodiments, the indication value A is 0; the indication value B is 1; the indication value C is 2; and the indication value D is 3.

In some embodiments, the number of IFFT points of the first inverse Fourier transform and the number of IFFT points of the second inverse Fourier transform both satisfy an n-th power of 2, where n is a natural number.

In some embodiments, the parameter set further includes a third indication, where the third indication is used to indicate performing a filtering operation or a windowing operation on data.

In some embodiments, an operation related to the third indication is performed after an operation related to the second indication.

In some embodiments, the parameter set further includes a fourth indication, where the fourth indication is used to indicate a configuration parameter of a sub-band.

In some embodiments, an operation related to the fourth indication is performed before an operation related to the first indication.

In some embodiments, the configuration parameter of the sub-band includes a sub-band number parameter and a subcarrier spacing parameter.

In some embodiments, an indication value of the sub-band number parameter is A, used to indicate that a number of sub-bands is 1; an indication value of the sub-band number parameter is B, used to indicate that a number of sub-bands is M, where M is an integer greater than 1.

In some embodiments, when the indication value of the sub-band number parameter is A, an indication value of the second indication is A.

In some embodiments, the indication value of the subcarrier spacing parameter is A, used to indicate that subcarrier spacings of the sub-bands are the same; the indication value of the subcarrier spacing parameter is B, used to indicate that subcarrier spacings of the sub-bands are different.

In some embodiments, the configuration parameter of the sub-band further includes at least one of a sub-band bandwidth, a subcarrier spacing corresponding to each sub-band, and a number of subcarriers corresponding to each sub-band.

In some embodiments, the parameter set further includes a fifth indication, where the fifth indication is used to indicate whether to perform discrete Fourier transform (DFT) modulation or orthogonal time frequency and space (OTFS) modulation on the data.

In some embodiments, an operation related to the fifth indication is performed before an operation related to the first indication.

In some embodiments, the parameter set also includes a sixth indication, where the sixth indication is used to indicate a carrying mode of data in time and frequency.

In some embodiments, the sixth indication is used to indicate that the data is transmitted in the time domain, or in the frequency domain, or in the time-frequency domain.

In some embodiments, the parameter set further includes a seventh indication, and the seventh indication is used to indicate whether to add a cyclic prefix or a guard interval after data undergoes the first inverse Fourier transform.

In some embodiments, each group of parameter sets among the N groups of parameter sets has a corresponding identifier, and different groups of parameter sets correspond to different identifiers.

In some embodiments, respective identifiers among N identifiers respectively corresponding to the N groups of parameter sets correspond to different carrier types.

In some embodiments, the communication module 302 is configured to receive control information, where the control information carries an identifier of the group of parameter sets that is selected.

In some embodiments, the control information is carried in downlink control information (DCI) or in a radio resource control (RRC) signaling.

In some embodiments, at least one group of parameter sets among the N groups of parameter sets includes both the first indication and the second indication not being A.

In some embodiments, each group of parameter sets among the N groups of parameter sets includes at least one parameter subset.

In some embodiments, each group of parameter subsets among the at least one group of parameter subsets has a corresponding subset identifier, and different groups of parameter subsets correspond to different subset identifiers.

In some embodiments, the identifier of the group of parameter sets occupies log2N bits, a subset identifier of the group of parameter subsets occupies log2P bits, and a value of P is equal to a number of parameter subsets of a parameter set with a largest number of parameter subsets among the N groups of parameter sets.

In a case where the functions of the above integrated modules are implemented in the form of hardware, the embodiments of the present disclosure further provide a possible structure of a communication apparatus, and the communication apparatus is configured to perform the data transmission method provided in the embodiments of the present disclosure. As shown in FIG. 14, the communication apparatus 400 includes a communication interface 403, a processor 402 and a bus 404. In some embodiments, the communication apparatus may further include a memory 401.

The processor 402 may implement or perform various exemplary logical blocks, modules and circuits described in conjunction with the embodiments of the present disclosure. The processor 402 may be a central processing unit, a general-purpose processor, a digital signal processor, an application specific integrated circuit, a field programmable gate array or any other programmable logic device, a transistor logic device, a hardware component, or any combination thereof. It may implement or perform various exemplary logical blocks, modules and circuits described in conjunction with the embodiments of the present disclosure. The processor 402 may also be a combination that implements computing functions, for example, including a combination of one or more microprocessors, a combination of a digital signal processor (Digital Signal Processor, DSP) and a microprocessor, etc.

The communication interface 403 is configured to connect with other devices through a communication network. The communication network may be an Ethernet, a radio access network, a wireless local area network (WLAN), or the like.

The memory 401 may be a read-only memory (Read-Only Memory, ROM), or other types of a static storage device that may store static information and instructions, a random access memory (Random Access Memory, RAM), or other types of a dynamic storage device that may store information and instructions, or an electrically erasable programmable read-only memory (Electrically Erasable Programmable Read-Only Memory, EEPROM), a magnetic disk storage medium or other magnetic storage device, or any other medium that can be used to carry or store desired program codes in the form of instructions or data structures and can be accessed by a computer, but which is not limited thereto.

As an implementation, the memory 401 may exist independently of the processor 402, and the memory 401 may be connected to the processor 402 via the bus 404 and is used for storing instructions or program codes. The processor 402, when calling and executing the instructions or program codes stored in the memory 401, is capable of implementing the data transmission method provided in the embodiments of the present disclosure.

As another implementation, the memory 401 may be integrated with the processor 402.

The bus 404 may be an extended industry standard architecture (EISA) bus or the like. The bus 404 may be classified into an address bus, a data bus, and a control bus, or the like. For ease of representation, only one bold line is used for the representation in FIG. 14, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the data transmission method as described in any embodiment of the above-mentioned embodiments.

In some implementations, the computer may be the above-mentioned data transmission apparatus, and the present disclosure does not limit the form of the computer.

In some examples, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine readable storage medium" may include, but is not limited to, a wireless channel and various other media capable of storing, containing, and/or carrying instructions and/or data.

Some embodiments of the present disclosure provide a computer program product including instructions, and the computer program product, when running on a computer, causes the computer to perform the data transmission method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A data transmission method, **characterized by** comprising:
selecting a group of parameter sets among N groups of parameter sets, wherein the parameter set comprises a first indication and a second indication, the first indication is used to indicate an execution mode of a first inverse Fourier transform, and the second indication is used to indicate an execution mode of a second inverse Fourier transform; and
performing data transmission based on the group of parameter sets that is selected.

2. The method according to claim 1, wherein
an indication value of the first indication is A, used to indicate that the first inverse Fourier transform is not performed, and A is an integer;
an indication value of the first indication is B, used to indicate that the first inverse Fourier transform is an inverse Fourier transform with 1 times of a number of inverse fast Fourier transform (IFFT) points, and B is an integer;
an indication value of the first indication is C, used to indicate that the first inverse Fourier transform is an oversampled inverse Fourier transform with two times of a number of IFFT points, and C is an integer; or
an indication value of the first indication is D, used to indicate that the first inverse Fourier transform is an oversampled inverse Fourier transform greater than equal to 4 times of a number of IFFT points, and D is an integer.

3. The method according to claim 1, wherein
there are E available subcarriers in a frequency domain within a sub-band before the first inverse Fourier transform,
an indication value of the first indication is A, used to indicate that the first inverse Fourier transform is not performed;
an indication value of the first indication is B, used to indicate that the first inverse Fourier transform is an M₁-point inverse discrete Fourier transform, wherein M₁ is an integer and E<=M₁<2E;
an indication value of the first indication is C, used to indicate that the first inverse Fourier transform is an M₂-point inverse discrete Fourier transform, wherein M₂ is an integer and 2E<=M₂<4E; or
an indication value of the first indication is D, used to indicate that the first inverse Fourier transform is an M₃-point inverse discrete Fourier transform, wherein M₃ is an integer and M₃>=4E.

4. The method according to claim 1, wherein
an indication value of the second indication is A, used to indicate that the second inverse Fourier transform is not performed;
an indication value of the second indication is B, used to indicate that the second inverse Fourier transform is an inverse Fourier transform with 1 times of a number of IFFT points;
an indication value of the second indication is C, used to indicate that the second inverse Fourier transform is an oversampled inverse Fourier transform with 2 times of a number of IFFT points; or
an indication value of the second indication is D, used to indicate that the second inverse Fourier transform is an oversampled inverse Fourier transform greater than equal to 4 times of a number of IFFT points.

5. The method according to claim 1, wherein
there are F sub-bands in a frequency domain before the second inverse Fourier transform,
an indication value of the second indication is A, used to indicate that the second inverse Fourier transform is not performed;
an indication value of the second indication is B, used to indicate that the second inverse Fourier transform is an X₁-point inverse discrete Fourier transform, wherein X₁ is an integer and F<=X₁< 2F;
an indication value of the second indication is C, used to indicate that the second inverse Fourier transform is an X₂-point inverse discrete Fourier transform, wherein X₂ is an integer and 2F<=X₂< 4F; or
an indication value of the second indication is D, used to indicate that the second inverse Fourier transform is an X₃-point inverse discrete Fourier transform, wherein X₃ is an integer and X₃>=4F.

6. The method according to claim 2, 3, 4, or 5, wherein
an indication value A is 0; an indication value B is 1; an indication value C is 2; and an indication value D is 3.

7. The method according to claim 2, 3, 4, or 5, wherein
a number of IFFT points of the first inverse Fourier transform and a number of IFFT points of the second inverse Fourier transform both satisfy an n-th power of 2, wherein n is a natural number.

8. The method according to claim 1, wherein the parameter set further comprises a third indication, and the third indication is used to indicate performing a filtering operation or a windowing operation on data.

9. The method according to claim 8, wherein an operation related to the third indication is performed after an operation related to the second indication.

10. The method according to claim 1, wherein the parameter set further comprises a fourth indication, and the fourth indication is used to indicate a configuration parameter of a sub-band.

11. The method according to claim 10, wherein an operation related to the fourth indication is performed before an operation related to the first indication.

12. The method according to claim 10, wherein the configuration parameter of the sub-band comprises a sub-band number parameter and a subcarrier spacing parameter.

13. The method according to claim 10, wherein
an indication value of the sub-band number parameter is A, used to indicate that a number of sub-bands is 1; or
an indication value of the sub-band number parameter is B, used to indicate that a number of sub-bands is M, wherein M is an integer greater than 1.

14. The method according to claim 13, wherein in response to that the indication value of the sub-band number parameter is A, an indication value of the second indication is A.

15. The method according to claim 12, wherein
an indication value of the subcarrier spacing parameter is A, used to indicate that subcarrier spacings of the sub-band are the same; or
an indication value of the subcarrier spacing parameter is B, used to indicate that subcarrier spacings of the sub-band are different.

16. The method according to claim 10, wherein the sub-band configuration parameter further comprises at least one of a sub-band bandwidth, a subcarrier spacing corresponding to each sub-band, and a number of subcarriers corresponding to each sub-band.

17. The method according to claim 1, wherein the parameter set further comprises a fifth indication, and the fifth indication is used to indicate whether to perform discrete Fourier transform (DFT) modulation or orthogonal time frequency and space (OTFS) modulation on data.

18. The method according to claim 17, wherein an operation related to the fifth indication is performed before an operation related to the first indication.

19. The method according to claim 1, wherein the parameter set further comprises a sixth indication, and the sixth indication is used to indicate a carrying mode of data in time and frequency.

20. The method according to claim 19, wherein the sixth indication is used to indicate that the data is transmitted in time domain, or in frequency domain, or in time-frequency domain.

21. The method according to claim 1, wherein a parameter set further comprises a seventh indication, and the seventh indication is used to indicate whether to add a cyclic prefix or a guard interval after data undergoes the first inverse Fourier transform.

22. The method according to claim 1, wherein each group of parameter sets among the N groups of parameter sets has a corresponding identifier, and different groups of parameter sets correspond to different identifiers.

23. The method according to claim 22, wherein respective identifiers among identifiers respectively corresponding to the N groups of parameter sets correspond to different carrier types.

24. The method according to claim 22, further comprising:
receiving control information, wherein the control information carries an identifier of the group of parameter sets that is selected.

25. The method according to claim 24, wherein the control information is carried in downlink control information (DCI) or in a radio resource control (RRC) signaling.

26. The method according to claim 1, wherein at least one group of parameter sets among the N groups of parameter sets comprises both the first indication and the second indication being not A.

27. The method according to claim 1, wherein each group of parameter sets among the N groups of parameter sets comprises at least one parameter subset.

28. The method according to claim 27, wherein each group of parameter subsets among the at least one group of parameter subsets has a corresponding subset identifier, and different groups of parameter subsets correspond to different subset identifiers.

29. The method according to claim 28, wherein an identifier of the group of parameter sets occupies log₂N bits, a subset identifier of the group of parameter subsets occupies log₂P bits, and a value of P is equal to a number of parameter subsets of a parameter set with a largest number of parameter subsets among the N groups of parameter sets.

30. A communication apparatus, **characterized by** comprising: a memory and a processor; wherein the memory is coupled with the processor; the memory is configured to store instructions executable by the processor; and the processor, when executing the instructions, performs the method according to any one of claims 1 to 29.

31. A computer readable storage medium, **characterized in that** the computer readable storage medium has stored computer instructions thereon, and the computer instructions, when executed on a communication apparatus, cause the communication apparatus to perform the method according to any one of claims 1 to 29.
